# EUROPÄISCHE PATENTANMELDUNG

(11) **EP 0 923 909 A1**
(43) Veröffentlichungstag der Anmeldung: **23.06.1999**
(21) Anmeldenummer: 98123940.3
(22) Anmeldetag: 16.12.1998
(51) Int. Cl.: A61C 8/00

(54) **Dentalimplantat**

(30) Priorität: 17.12.1997 DE 19755986
(71) Anmelder: C. HAFNER GmbH & Co., D-75173 Pforzheim (DE)
(72) Erfinder: Amann, Hans, 70597 Stuttgart (DE); Hartmann, H.-J., Dr., 82327 Tutzing (DE)
(74) Vertreter: Trappenberg, Hans

(57) **Zusammenfassung**

Ein Dentalimplantat weist einen im Kiefer verankerbaren Implantatpfosten und ein Aufbauteil 1 auf, welches mittels einer Halteschraube 2 am Implantatpfosten befestigbar ist. Das Aufbauteil 1 weist Mittel 3 zur Sicherung der Halteschraube 2 auf.

## Beschreibung

Die Erfindung betrifft ein Dentalimplantat mit einem im Kiefer verankerbaren Implantatpfosten und einem Aufbauteil, welches mittels einer Halteschraube am Implantatpfosten befestigbar ist.

Ein derartiges Implantat ist beispielsweise aus der EP 0 593 926 A1 bekannt. Bei dem bekannten Implantat wird das Aufbauteil teilweise in eine am koronalen Ende des Implantatpfostens angeordnete Ausnehmung eingesetzt. Zur Rotationssicherung enthält die Ausnehmung sechskantförmig angeordnete erste Anlageflächen. Entsprechend der Anlageflächen weist das Aufbauteil den Anlageflächen gegenüberliegende und zugeordnete zweite Anlageflächen auf. Durch Formschluß wir eine Rotationssicherung des Aufbauteils erreicht.

Koaxial zur Ausnehmung und im Anschluß an diese enthält der Implantatpfosten ein Innengewinde, in welches eine Halteschraube mit einem Außengewinde eingeschraubt ist. Die Halteschraube durchdringt eine Innenbohrung des Aufbauteils. Die Innenbohrung ist als Durchgangsbohrung ausgebildet, so daß die Halteschraube soweit eingeführt werden kann, daß das genannte Außengewinde in das Innengewinde eingeschraubt werden kann.

Das Aufbauteil liegt mit einer Ringschulter an der koronalen Stirnfläche des Implantatpfostens unter Vorspannung fest an, wodurch eine möglichst spaltfreie bakteriendichte Verbindung des Aufbauteils mit dem Implantatkörper erreicht werden soll. Die Vorspannung wird mittels der in den Implantatpfosten eingeschraubten Halteschraube aufgebracht.

Nachteilig bei dem bekannten Implantat ist, daß sich die Halteschraube selbständig lösen kann. Hierdurch ist zum einen nicht mehr gewährleistet, daß das Aufbauteil möglichst spaltfrei auf dem Implantatpfosten sitzt, wodurch Bakterien in diesen Spalt eindringen können. Zum anderen können sich durch das Lösen der Halteschraube Okklusionsstörungen ergeben, die zur Explantation führen können.

Es ist Aufgabe der Erfindung ein eingangs genanntes Dentalimplantat derart auszubilden, daß sich der Sitz des Aufbauteils auf dem Implantatpfosten über längere Zeit nicht verschlechtert.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung weist das Aufbauteil Mittel zur Sicherung der Halteschraube auf. Durch die Mittel zur Sicherung der Halteschraube wird in vorteilhafter Weise erreicht, daß sich die Halteschraube nicht selbsttätig lösen kann. Hierdurch bleibt der Sitz des Aufbauteils auf dem Implantatpfosten über eine sehr lange Zeit unverändert. Dies wirkt sich besonders günstig auf die Dichtheit zwischen dem Aufbauteil und dem Implantatpfosten aus. Durch die erfindungsgemäße Ausbildung des Implantats ist somit gewährleistet, daß keine Bakterien in einen Spalt zwischen dem Aufbauteil und dem Implantatpfosten eindringen können.

Darüber hinaus ist es durch die erfindungsgemäße Ausbildung des Dentalimplantats nicht mehr erforderlich, die Halteschraube, mit der das Aufbauteil auf dem Implantatpfosten befestigt ist, zur Verhinderung eines unerwünschten Lösens der Schraube mit erhöhter Kraft anzuziehen. Dies ist insbesondere deshalb von großem Vorteil, da die beim Anziehen der Halteschraube aufgebrachte Kraft über den Implantatpfosten in den Kiefer geleitet wird, was zum einen beim Patienten Schmerzen hervorrufen kann und zum anderen die Festigkeit des Sitzes des Implantatpfostens im Kiefer beeinträchtigen, im schlimmsten Fall sogar Beschädigungen hervorrufen kann.

In besonders vorteilhafter Weise weist das Aufbauteil zur Befestigung einer Suprakonstruktion eine Befestigungsschraube auf, mittels welcher die Halteschraube fixierbar ist. Da Suprakonstruktionen häufig mittels einer Befestigungsschraube am Aufbauteil befestigt sind, ist die Fixierung der Halteschraube mittels der Befestigungsschraube sehr günstig für die Handhabung des Implantats. Denn in diesem Fall brauchen keine zusätzlichen Maßnahmen zur Sicherung der Halteschraube ergriffen werden.

Als besonders günstig hat sich eine Ausführungsform herausgestellt, bei der die Befestigungsschraube so angeordnet ist, daß sie im eingeschraubten Zustand auf das koronale Ende des Schraubenkopfes der Halteschraube eine Kraft ausübt. Eine derartige Ausführungsform läßt sich sehr leicht realisieren, da es hierbei lediglich auf eine genaue Positionierung der Öffnung im Aufbauteil für das Einschrauben der Befestigungsschraube ankommt. Es ist jedoch auch möglich, daß die Befestigungsschraube auf andere Weise mit der Halteschraube in Wirkverbindung tritt, wenn dies vorteilhaft sein sollte. So ist es möglich, daß die Halteschraube Ausnehmungen hat, mittels welcher die Befestigungsschraube form- oder kraftschlüssig mit der Halteschraube in Verbindung steht.

Bei einer weiteren Ausführungsform der Erfindung, welche insbesondere bei sogenannten abgewinkelten Aufbauteilen Verwendung finden kann, weist das Aufbauteil eine Ausnehmung auf, in welcher ein Verschlußteil angeordnet ist, welches auf das koronale Ende des Schraubenkopfes der Halteschraube eine Kraft ausübt. Die Ausnehmung des Aufbauteils ist in der Regel deshalb erforderlich, weil durch die Abwinklung des Aufbauteils die Halteschraube nicht in axialer Richtung in das Aufbauteil eingeführt werden kann sondern in einem Winkel zur Achse des Aufbauteils. Die Halteschraube wird dann durch die Ausnehmung in das Aufbauteil eingeführt.

Zur Abdichtung der Ausnehmung wurde die Ausnehmung bisher nach Befestigung des Aufbauteils auf dem Implantatpfosten mittels eines Füllmaterials wie beispielsweise Zement oder ähnliches ausgefüllt. Da die Ausnehmung regelmäßig sehr groß ist, konnte eine gute Abdichtung bisher nur sehr schwer erreicht werden. Darüber hinaus konnte das Aufbauteil nach erfolgter Abdichtung nur noch mit entsprechend großem Aufwand vom Implantatpfosten entfernt werden.

Durch das Verschlußteil wird zum einen erreicht, daß die Ausnehmung auf einfache Weise abgedichtet werden kann, und zum anderen läßt sich durch das Verschlußteil die Fixierung der Halteschraube sehr einfach realisieren.

In besonders vorteilhafter Weise ist das Verschlußteil mittels einer Schwalbenschwanzführung in das Aufbauteil einschiebbar. Die Schwalbenschwanzführung ist dabei so ausgebildet, daß das Verschlußteil, wenn es sich in seiner vorbestimmten Position befindet, auf den Schraubenkopf der Halteschraube aufstößt. Die Fixierung des Verschlußteils wird in besonders vorteilhafter Weise mittels der Befestigungsschraube vorgenommen.

Weitere Vorteile der vorliegenden Erfindung ergeben sich aus der nachfolgenden Beschreibung eines besonderen Ausführungsbeispiels unter Bezugnahme auf die Zeichnung.

Es zeigt
- Figur 1a: eine erste Ausführungsform eines erfindungsgemäßen Aufbauteils in Seitenansicht,
- Figur 1b: das in Figur 1a dargestellte Aufbauteil in der Draufsicht,
- Figur 2a: eine zweite Ausführungsform eines erfindungsgemäßen Aufbauteils in Seitenansicht,
- Figur 2b: das in Figur 2a dargestellte Aufbauteil in der Draufsicht und
- Figur 2c: eine Detaildarstellung eines in eine in der zweiten Ausführungsform enthaltene Ausnehmung eingesetzten Verschlußteils.

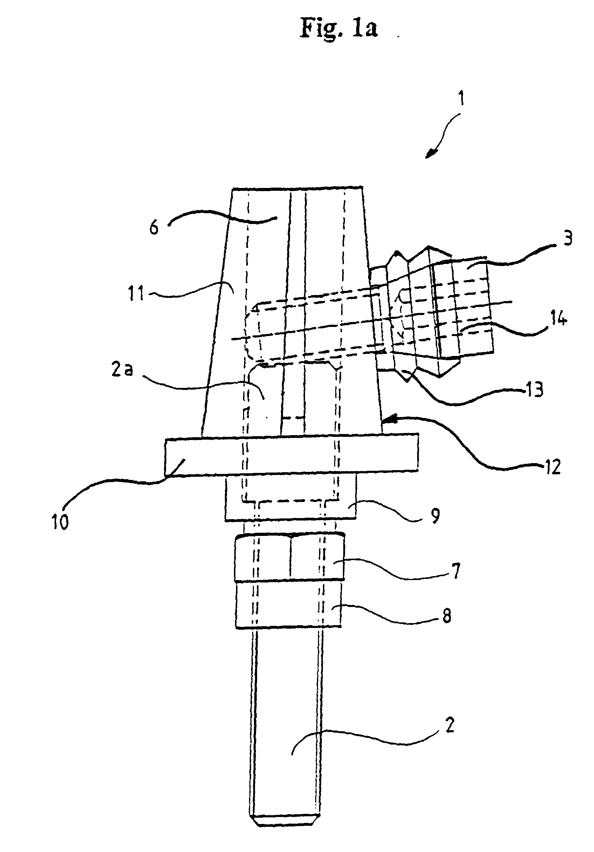

Wie der Figur 1a entnommen werden kann, weist eine erste Ausführungsform eines Aufbauteils 1 in axialer Richtung eine Innenbohrung 6 auf, deren Durchmesser etwa dem Durchmesser des Kopfes 2a einer Schraube 2 entspricht. Die Bohrung 6 weist an ihren dem koronalen Ende abgewandten Ende eine schulterförmige Verkleinerung auf, auf die der Kopf 2a der Halteschraube 2 aufsitzt. Das Aufbauteil 1 läßt sich somit mittels der Halteschraube 2 an einem nicht gezeigten Implantatpfosten befestigen.

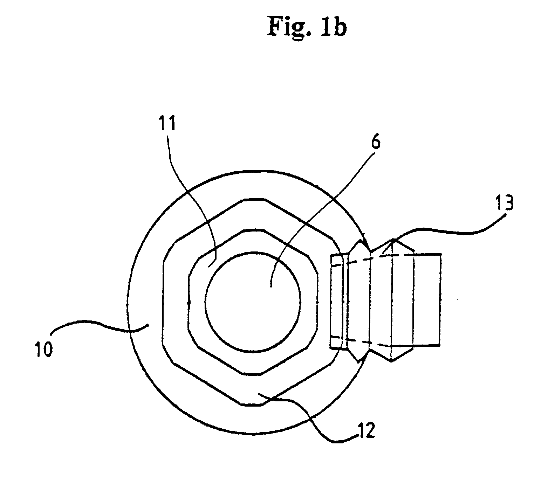

Das Aufbauteil 1 weist an seinem dem koronalen Ende abgewandten Ende eine sechskantförmig ausgebildete Scheibe 7 auf. Die Scheibe 7 hat zweite Anlageflächen, welche im im Implantatpfosten eingebauten Zustand in einer am koronalen Ende des Implantatpfostens angeordneten Ausnehmung ausgebildeten ersten Anlageflächen gegenüberstehen. Durch den erreichten Formschluß wird eine Rotationssicherung des Aufbauteils 1 erreicht. Zur Verbesserung der Führung des Aufbauteils 1 im Implantatpfosten sind ober- und unterhalb der sechskantförmigen Scheibe 7 kreisförmige Scheiben 8, 9 angeordnet. Oberhalb der Scheibe 9 schließt sich ein Implantataufbauteller 10 an, auf welchem ein Implantataufbau 11 angeordnet ist. Der Implantataufbau 11 ist konisch und sechskantförmig ausgebildet. Die durch die konische sechskantförmige Ausbildung des Implantataufbaus 11 erhaltenen planen Flächen 12 haben die selbe Lage wie die Flächen der sechskantförmigen Scheibe 7, wie dies insbesondere der Figur 1b entnommen werden kann. Das heißt, die Lage der sechskantförmigen Scheibe 7 wird durch die Lage des sechskanfförmigen Implantataufbaus 11 wiedergegeben. Hierdurch läßt sich anhand der Stellung des Implantataufbaus 11 die Stellung der sechskantförmigen Scheibe 7 feststellen. Dies bringt beim Einsetzen des Aufbauteils 1 in den Implantatpfosten große Vorteile im Hinblick auf die richtige Positionierung des Aufbauteils 1.

Das Aufbauteil 1 weist des weiteren eine etwa in einem Winkel von 100° Grad zur Achse der Innenbohrung 6 des Aufbauteils 1 verlaufende Gewindebohrung auf, in welcher eine Befestigungsschraube 3 angeordnet ist. Die Befestigungsschraube 3 dient zum einen der Befestigung einer nicht gezeigten Suprakonstruktion am Aufbauteil 1. Zum anderen wird mittels der Befestigungsschraube 3 die Halteschraube 2 in ihrer Lage fixiert, so daß sie aufdrehgesichert ist. Dies geschieht dadurch, daß die Schraube 3 im eingeschraubten Zustand auf den Kopf 2a der Halteschraube 2 drückt.

Durch die besondere Anordnung der Befestigungsschraube 3 am Aufbauteil 1 sowie die sechskantförmige Ausbildung des Implantataufbaus 11 kann der Implantataufbau 11 um bis zu 50 Prozent reduziert werden, ohne daß er an Funktionalität verliert.

Zur Abdichtung des Aufbauteils 1 ist eine Schraubenkopfhülse 13 vorgesehen, welche plan auf einer Fläche 12 des sechskanfförmigen Implantataufbaus 11 liegt. Die Schraubenkopfhülse 13 ist innen teilweise konisch ausgebildet. Entsprechend dieses Konus weist der Kopf der Befestigungsschraube 3 ebenfalls einen konischen Bereich auf. Die Steigungen der beiden Konusse sind gleich. Hierdurch ergibt sich eine sehr gute Dichtigkeit der Befestigung der Suprakonstruktion am Aufbauteil 1.

Die Schraube 3 ist als Inbusschraube ausgebildet. Durch den Inbus 14 der Schraube 3 sowie durch die konische Ausbildung der Hülse 13 beziehungsweise des Schraubenkopfes der Schraube 3 ist es möglich, den Schraubenkopf bis zu 50 Prozent zu kürzen.

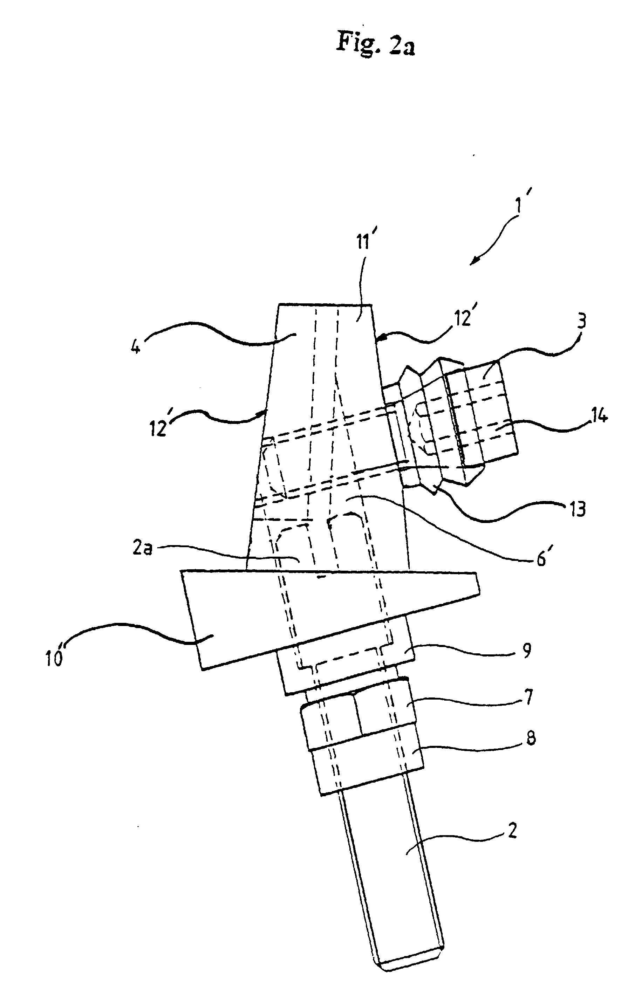

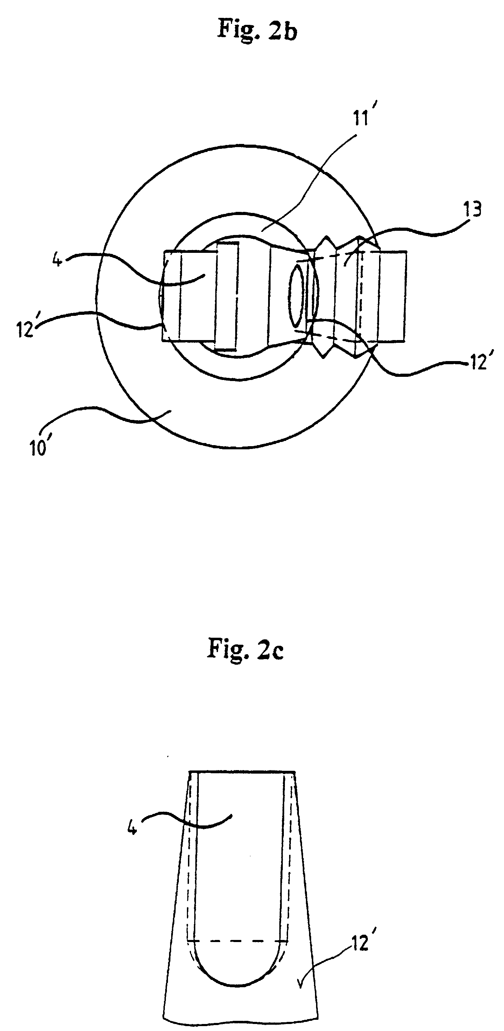

Bei der in den Figuren 2a bis 2c dargestellten zweiten Ausführungsform der Erfindung handelt es sich um ein sogenanntes abgewinkeltes beziehungsweise asymmetrisch ausgebildetes Aufbauteil, welches immer dann Verwendung findet, wenn der Implantatpfosten schräg im Kiefer verankert werden muß. In den Figuren 2a bis 2c sind der Einfachheit halber die Teile, welche sich nicht von den in den Figuren 1a und 1b dargestellten Teilen unterscheiden, mit den selben Bezugszeichen wie in den Figuren 1a und 1b versehen.

Wie der Figur 2a entnommen werden kann, weist ein Aufbauteil 1' eine Innenbohrung 6' auf, deren Durchmesser etwa dem Durchmesser des Kopfes 2a einer Schraube 2 entspricht. Die Achse der Bohrung 6' verläuft in einem Winkel von etwa 15° Grad zur Achse des Aufbauteils 1'. Des weiteren weist die Bohrung 6' an ihrem dem koronalen Ende abgewandten Ende eine schulterförmige Verkleinerung auf, auf die der Kopf 2a der Halteschraube 2 aufsitzt. Das Aufbauteil 1' läßt sich somit mittels der Halteschraube 2 an einem nicht gezeigten Implantatpfosten befestigen.

Entsprechend der ersten Ausführungsform weist das Aufbauteil 1' an seinem dem koronalen Ende abgewandten Ende eine sechskantförmig ausgebildete Scheibe 7 auf, welche zweite Anlageflächen hat, welche im im Implantatpfosten eingebauten Zustand in einer am koronalen Ende des Implantatpfostens angeordneten Ausnehmung ausgebildeten ersten Anlageflächen gegenüberstehen. Durch den erreichten Formschluß wird eine Rotationssicherheit des Aufbauteils 1' erreicht. Zur Verbesserung der Führung des Aufbauteils 1' im Implantatpfosten sind ober- und unterhalb der sechskantförmigen Scheibe 7 kreisförmige Scheiben 8, 9 angeordnet. Oberhalb der Scheibe 9 schließt sich ein Implantataufbauteller 10' an, auf welchem ein Implantataufbau 11' angeordnet ist. Der Implantataufbauteller 10' ist keilförmig ausgebildet, wobei die Oberseite mit der Unterseite einen Winkel von etwa 15° Grad einschließt. Hierdurch verläuft die Oberseite rechtwinklig zur Achse des Implantataufbaus 11' und die Unterseite rechtwinklig zur Achse der Innenbohrung 6' des Aufbauteils 1'.

Der Implantataufbau 11' ist konisch ausgebildet und weist zwei gegenüberliegende plane Führungsflächen 12' auf. Die planen Führungsflächen 12' haben die selbe Lage wie zwei entsprechende gegenüberliegende Flächen der sechskantförmigen Scheibe 7. Das heißt, die Lage der sechskantförmigen Scheibe 7 wird durch die Lage der gegenüberliegenden Führungsflächen 12' wiedergegeben.

Durch die Lage der Innenbohrung 6' des Aufbauteils 1' in einem Winkel zur Achse des Aufbauteils 1' ist im Aufbauteil 1' eine langlochförmige Öffnung ausgebildet. Wie insbesondere der Figur 2c entnommen werden kann, ist in der langlochförmigen Öffnung ein Verschlußteil 4 angeordnet. Das Verschlußteil 4 ist über eine Schwalbenschwanzführung mit dem Aufbauteil 1' verbunden. Das Verschlußteil 4 ist läßt sich somit vom koronalen Ende des Implantataufbaus 11' in die langlochförmige Ausnehmung schieben. Hierdurch ist die langlochförmige Ausnehmung nahezu vollständig ausgefüllt, so daß sie sehr einfach abgedichtet werden kann.

Das Verschlußteil 4 beziehungsweise die Schwalbenschwanzführung sind so ausgebildet, daß das dem koronalen Ende abgewandte Ende des Verschlußteils 4 auf dem Schraubenkopf 2a der Schraube 2 aufliegt. Hierdurch wird auf die Schraube 2 ein Druck ausgeübt, durch welchen ein unbeabsichtigtes Aufdrehen der Schraube 2 verhindert wird.

Das Aufbauteil 1' weist des weiteren eine etwa in einem Winkel von 100° Grad zur Achse des Implantataufbaus 11' verlaufende Gewindebohrung auf, in welcher eine Befestigungsschraube 3 angeordnet ist. Die Befestigungsschraube 3 dient zum einen der Befestigung einer nicht gezeigten Suprakonstruktion am Aufbauteil 1', zum anderen wird das Verschlußteil 4 mittels der Befestigungsschraube 3 in seiner Lage fixiert, da die Befestigungsschraube 3 sich bis in eine im Verschlußteil 4 angeordnete Gewindebohrung erstreckt.

Durch die besondere Anordnung der Befestigungsschraube 3 am Aufbauteil 1' sowie der planen Führungsflächen 12' des Implantataufbaus 11' kann der Implantataufbau 11' um bis zu 50 Prozent reduziert werden, ohne daß sie an Funktionalität verliert.

Entsprechend der ersten Ausführungsform ist zur Abdichtung des Aufbauteils 1' eine Schraubenkopfhülse 13 vorgesehen, welche plan auf einer Fläche 12' des Implantataufbaus 11' liegt. Die Schraubenkopfhülse 13 ist innen teilweise konisch ausgebildet. Entsprechend dieses Konus weist der Kopf der Befestigungsschraube 3 ebenfalls einen konischen Bereich auf. Die Steigungen der beiden Konusse sind gleich. Hierdurch ergibt sich eine sehr gute Dichtigkeit der Befestigung der Suprakonstruktion am Aufbauteil 1.

Die Schraube 3 ist ebenfalls als Inbusschraube ausgebildet. Durch den Inbus 14 der Schraube 3 sowie durch die konische Ausbildung der Hülse 13 beziehungsweise des Schraubenkopfes der Schraube 3 ist es möglich, den Schraubenkopf bis zu 50 Prozent zu kürzen.

## Patentansprüche

1. Dentalimplantat mit einem im Kiefer verankerbaren Implantatpfosten und einem Aufbauteil (1; 1'), welches mittels einer Halteschraube (2) am Implantatpfosten befestigbar ist,
dadurch gekennzeichnet,
daß das Aufbauteil (1;1') Mittel (3; 4) zur Sicherung der Halteschraube (2) aufweist.

2. Dentalimplantat nach Anspruch 1,
dadurch gekennzeichnet,
daß das Aufbauteil (1;1') zur Befestigung einer Suprakonstruktion eine Befestigungsschraube (3) aufweist, mittels welcher die Halteschraube (2) fixierbar ist.

3. Dentalimplantat nach Anspruch 2,
dadurch gekennzeichnet,
daß die Befestigungsschraube (3) so angeordnet ist, daß sie im eingeschraubten Zustand auf das koronale Ende des Schraubenkopfes der Halteschraube (2) eine Kraft ausübt.

4. Dentalimplantat nach Anspruch 1 oder 2,
dadurch gekennzeichnet,
daß das Aufbauteil (1') eine Ausnehmung (5) aufweist, in welcher ein Verschlußteil (4) angeordnet ist, welches auf das koronale Ende des Schraubenkopfes der Halteschraube (2) eine Kraft ausübt.

5. Dentalimplantat nach Anspruch 4,
dadurch gekennzeichnet,
daß das Verschlußteil (4) mittels einer Schwalbenschwanzführung in das Aufbauteil (1') einschiebbar ist.

6. Dentalimplantat nach Anspruch 4 oder 5,
dadurch gekennzeichnet,
daß das Verschlußteil (4) mittels der Befestigungsschraube (3) fixierbar ist.
